# EUROPÄISCHE PATENTANMELDUNG

(11) **EP 1 111 549 A2**
(43) Veröffentlichungstag der Anmeldung: **27.06.2001**
(21) Anmeldenummer: 00127505.6
(22) Anmeldetag: 15.12.2000
(51) Int. Cl.: G07C 1/26

(54) **Brieftauben-Transponderanordnung**

(30) Priorität: 23.12.1999 DE 19962642
(71) Anmelder: AEG Identifikationssysteme GmbH, 89077 Ulm (DE)
(72) Erfinder: Baeger, Holm, Dr., 89134 Blaustein (DE)
(74) Vertreter: Weber, Gerhard

(57) **Zusammenfassung**

Für eine Brieftauben-Transponderanordnung mit einem ein Taubenbein umschließenden Ringkörper wird vorgeschlagen, in dem Ringmantel des das Taubenbein umgebenden Bereichs des Ringkörpers eine oder mehrere Flächenöffnungen vorzusehen und dadurch das Taubenbein besser zu belüften.

## Beschreibung

Die Erfindung betrifft eine Brieftauben-Transponderanordnung.

Während Brieftauben ursprünglich zur Übermittlung von Nachrichten eingesetzt waren und hierfür Depeschenhülsen wie z.B. aus der CH 214356 oder der US 2 343 679 bekannt mit relativ großem Transportbehälter und lösbarem Haltering um ein Bein der Brieftauben vorgesehen waren, sind Brieftauben mittlerweile im wesentlichen in Wettbewerben im Flugeinsatz, wo die Fluggeschwindigkeit von besonderer Bedeutung ist.

Zur individuellen Unterscheidung von Tauben können diese mit einer Kennzeichnung ausgestattet werden, wofür aus der FR 737 307 ein Aluminiumring bekannt ist, welcher neben einem Flächenanteil für eine Kennummer an einem Teilumfang des Rings eine oder mehrere Sollbruchstellen aufweist, welche verhindern sollen, daß der Ring zerstörungsfrei entfernt und mißbräuchlich einer anderen Taube aufgesteckt werden kann.

Zur genauen und möglichst manipulationssicheren Überwachung und Auswertung von Brieftaubenflügen, insbesondere in Wettbewerben, ist die Ausstattung von Brieftauben mit elektromagnetisch berührungslos abfragbaren Transpondern gebräuchlich. Diese sind typischerweise als schmale längliche Transponderkörper ausgeführt und in einem Ringkörper gehalten, der um ein Bein der Taube geschlossen ist. Der das Bein umschließende Bereich des Ringkörpers ist i. a. im wesentlichen zylindrisch und weist, um ein Verkippen der Anordnung zu vermeiden, im Regelfall eine Erstreckung in Längsrichtung des umschlossenen Beines auf, welche wenigstens gleich groß wie, vorzugsweise wesentlich größer als der lichte Durchmesser in dem umschließenden Bereich, ist. Der Ringkörper ist üblicherweise als Spritzgußteil in Form eines offenen, durch eine unlösbare Verrastung schließbaren Rings ausgeführt.

Aus der EP 0 485 039 A1 ist eine derartige Anordnung bekannt, bei welcher ein Ring für Geflügel entlang seines Umfangs gewellt und dadurch im Durchmesser dehnbar ist und mit dem Wachstum des Tieres sich am Bein unter leichter Spannung anliegend dehnen kann.

Die DE 297 12 599 U1 beschreibt eine Zeiterfassungseinrichtung für Tauben zur Erfassung der Flugzeit, insbesondere bei Wettbewerben, bei welcher über einem herkömmlichen Kennzeichnungsring der z. B. in der genannten FR 737 307 angesprochenen Art ein Kunststoffring angebracht wird, welcher an einem Teil seines Umfangs eine Aussparung als Sichtfenster auf die Kennzeichnung des Kennzeichnungsrings und an einem zweiten Umfangsabschnitt eine Aufnahme für einen Transponder enthält.

Der vorliegenden Erfindung liegt die Aufgabe zugrunde, eine Brieftauben-Transponderanordnung mit einem Beinring weiter zu verbessern, insbesondere auch in ihrer günstigen Beeinflussung der Flugleistung der beringten Taube.

Die Erfindung ist im Patentanspruch 1 beschrieben. Die Unteransprüche enthalten vorteilhafte Ausgestaltungen und Weiterbildungen der Erfindung.

Durch die erfindungsgemäße Ausgestaltung des Ringkörpers ergibt sich bei unverändert stabiler Aufhängung des Ringkörpers am Taubenbein eine verbesserte Belüftung des beringten Beines, woraus eine zumindest geringfügige, im Wettbewerb u. U. entscheidende Leistungssteigerung der Taube durch natürlicheres und damit besseres Körpergefühl insbesondere durch bessere Wärmeabgabe erwartet werden kann.

Die Erfindung kann insbesondere die Wärmeabgabe über den beringten Abschnitt des Taubenbeins verbessern.

Die Erfindung ist nachfolgend anhand vorteilhafter Ausführungsbeispiele unter Bezugnahme auf die Abbildungen noch eingehend veranschaulicht. Dabei zeigt:
Fig. 1 eine erste Ausführungsform in Schrägansicht
Fig. 2 eine Schnittdarstellung einer weiteren vorteilhaften Ausführungsform
Fig. 3 Abwicklungen verschiedener Ausführungsformen

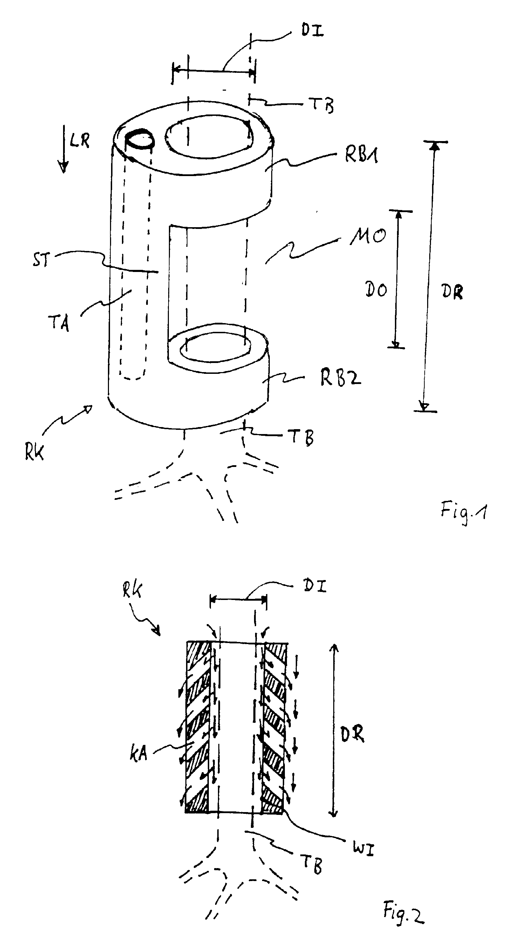

In Fig. 1 ist eine Taubenring-Transponderanordnung skizziert, welche in Längsrichtung LR beabstandet einen ersten Ringbogen RB1 und einen zweiten Ringbogen RB2 aufweist. Die Ringbögen sind über einen Längssteg ST im wesentlichen starr miteinander verbunden. Die Ringbögen umschließen ein Taubenbein TB, welches mit unterbrochener Linie skizziert ist.

Die skizzierte Anordnung unterscheidet sich von bekannten Anordnungen insbesondere dadurch, daß zwischen den Ringbögen RB1, RB2 eine Mantelöffnung MO der Erstreckung DO in Längsrichtung gegeben ist, wogegen bei bekannten Anordnungen typischerweise der Ringkörper im wesentlichen durchgehend zylindrische Form aufweist und das Taubenbein TB damit über die gesamte Länge DR des Ringkörpers von einem Ringmantel umgeben ist. Die erfindungsgemäße Ausbildung wenigstens einer eine Luftströmung durch die Öffnung ermöglichende, insbesondere begünstigende Wandöffnung in dem Ringmantel führt zu einer wesentlich besseren Belüftung des beringten Taubenbeins.

Die Länge DR des Ringkörpers ist vorteilhafterweise wenigstens gleich der lichten Weite Dl der Ringöffnungen der Ringbögen RB1, RB2, vorzugsweise jedoch wesentlich größer als diese, insbesondere DR > 2,5 Dl. Die anfänglich offenen Ringbögen können über nicht eingezeichnete Rastmittel oder dergleichen verschließbar sein, wobei die Ringbögen sowohl nur einseitig über den Steg ST verbunden und mit separaten freien Enden einzeln verrastbar sein können oder auch an beiden Ringbogenenden über je einen Längssteg verbunden sein können und der Ringschluß durch Verrastung der endständigen Längsstege ineinander oder in ein Vermittlungsglied erfolgt. Weitere Verbindungsstege und/oder weitere Ringbögen in Zwischenpositionen können vorgesehen sein.

In dem Ringkörper RK, insbesondere in einer radialen Erweiterung des Längsstegs ST kann in an sich bekannter Weise eine einen Transponder aufnehmende Aufnahme TA vorgesehen sein.

In Fig. 2 ist in einer Schnittdarstellung mit Blickrichtung senkrecht zur Längsrichtung LR eine weitere vorteilhafte Ausführung dargestellt, bei welcher in der Mantelfläche des Ringkörpers mehrere im Vergleich zur Längserstreckung DR des ein Taubenbein TB umschließenden Bereichs kurze Flächenöffnungen durch den Ringmantel führen, welche im skizzierten Beispiel als Strömungskanäle KA ausgeführt und gegen die Längsrichtung LR schräg geneigt ausgerichtet sind, insbesondere um einen Winkel zwischen 20 ° und 70 °. Die Berandungen der Kanäle, insbesondere an der außenliegenden Mantelfläche können so gestaltet sein, daß der außen an der Mantelfläche infolge der Flugbewegung entlangstreichende Luftstrom an den äußeren Kanalöffnungen einen Unterdruck erzeugt und damit einen Luftstrom durch die Kanäle und damit auch durch das Innere des Ringmantels entlang des Taubenbeines verursacht oder fördert. Für die Formgebung der Mantelaußenfläche zur Erzielung eines solchen Effektes sind an sich Beispiele aus der Strömungstechnik, beispielsweise aus Tragflächen-Profilberechnungen u. a. bekannt. Die Fig. 2 ist hierzu lediglich schematisch zu verstehen. Die Kanäle können auch so gestaltet sein, daß sie eine Strömung von außen durch die Kanäle zum Taubenbein begünstigen.

Der Flächenanteil der Öffnungen im Ringmantel an der durch lichte Weite Dl und Längserstreckung DR aufgespannten Innenwandfläche beträgt vorteilhafterweise wenigstens 10 %, liegt vorzugsweise aber deutlich höher. Bei strömungsleitender Gestaltung der Flächenöffnungen kann ein geringerer Flächenanteil der Öffnungen ausreichen.

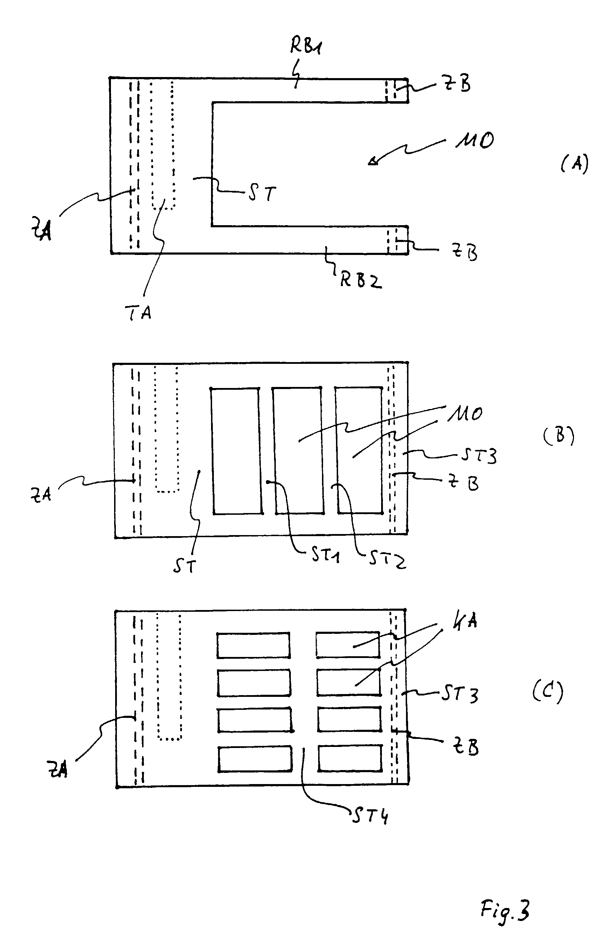

In Fig. 3 sind verschiedene Ausführungen von erfindungsgemäßen Transponderanordnungen bei offenem Ring als Abwicklung der äußeren Mantelflächen skizziert. Fig. 3 (A) zeigt das Beispiel nach Fig. 1 in der Variante mit separat zu schließenden Ringbögen RB1, RB2, welche an ihren freien Enden beispielsweise eine Zahnung ZB aufweisen können, welche in einer Gegenzahnung ZA in dem den Verbindungssteg ST zwischen den beiden Ringbögen bildenden Hauptkörper verrastbar sind.

In dem Beispiel nach Fig. 3 (B) sind abweichend davon die dem Steg ST des Hauptkörpers abgewandten Enden der Ringbögen RB1, RB2 durch einen Längssteg ST3 mit durchgehender Zahnung ZB verbunden. Die Mantelöffnung MO ist durch längsverlaufende Trennstege ST1, ST2 in mehrere Teilöffnungen unterteilt.

Die Fig. 3 (C) zeigt die Abwicklung der in Fig. 2 im Querschnitt skizzierten Anordnung, bei welcher die Mantelöffnungen durch die Mehrzahl von schräg verlaufenden Kanälen KA gebildet sind, welche in zwei durch einen Längssteg getrennten Reihen gruppiert sind.

Die vorstehend und in den Ansprüchen angegebenen und/oder den Zeichnungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens auf mancherlei Weise abwandelbar. Insbesondere sind für die Form und Anordnung der Flächenöffnungen eine Vielzahl gleich oder ähnlich wirkender Variationen vorstellbar.

## Patentansprüche

1. Brieftauben-Transponderanordnung mit einem um ein Bein einer Taube geschlossenen Ringkörper, welcher als Träger für einen Transponder dient, wobei die Erstreckung des umschließenden Bereichs des Ringkörpers in Längsrichtung des umschlossenen Beins größer ist als der lichte Durchmesser des geschlossenen Rings, dadurch gekennzeichnet, daß die Mantelfläche des das Bein umschließenden Bereichs des Ringkörpers von wenigstens einer eine Luftströmung zum Taubenbein ermöglichenden Flächenöffnung durchbrochen ist.

2. Anordnung nach Anspruch 1, dadurch gekennzeichnet, daß der Ringkörper wenigstens zwei das Bein vollständig umschließende in Längsrichtung beabstandete und durch wenigstens einen Steg verbundene Ringbögen aufweist.

3. Anordnung nach Anspruch 1 oder 2, dadurch gekennzeichnet, daß in dem Ringmantel zur Längsrichtung geneigte Kanäle als Öffnungen ausgebildet sind.

4. Anordnung nach einem der Ansprüche 1 bis 3, dadurch gekennzeichnet, daß die Flächenöffnungen strömungsleitend geformt sind.

5. Anordnung nach einem der Ansprüche 1 bis 4, dadurch gekennzeichnet, daß Berandungen der Öffnungen ein Profil zur Erzeugung oder Unterstützung einer Luftströmung durch die Öffnungen aufweisen.

6. Anordnung nach einem der Ansprüche 1 bis 5, dadurch gekennzeichnet, daß der Flächenanteil der Öffnungen an der Innenfläche des Ringmantels wenigstens 10 %, insbesondere wenigstens 20 % beträgt.
